(19) Europäisches Patentamt
European Patent Office
Office européen des brevets

(11) **EP 2 161 902 A1**

(12) **EUROPEAN PATENT APPLICATION**

(43) Date of publication:
**10.03.2010 Bulletin 2010/10**

(51) Int Cl.:
*H04L 29/08* (2006.01)     *H04L 12/24* (2006.01)
*G06F 17/18* (2006.01)

(21) Application number: **08252953.8**

(22) Date of filing: **05.09.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **BRITISH TELECOMMUNICATIONS public limited company**
**London**
**EC1A 7AJ (GB)**

(72) Inventor: **The designation of the inventor has not yet been filed**

(74) Representative: **Williamson, Simeon Paul et al**
**BT Group Legal**
**Intellectual Property Department**
**PP C5A, BT Centre**
**81 Newgate Street**
**London**
**EC1A 7AJ (GB)**

(54) **Load balancing in a data network**

(57) A data network comprises a plurality of interconnected service providing nodes 120 each of which is operable to provide one or more services to one or more service requesting devices connected to the network. Each service providing node 120 has service price determination means 1236 for setting a price parameter and service advertising means 1238 for advertising a price parameter whereby the or each service requesting device may select to receive one or more services or parts thereof from any one or more of the service providing nodes in dependence upon each respective advertised price parameter, wherein each service-providing node includes benefit determination means 1234 for determining a benefit parameter which depends upon the number and/or type of services or parts thereof provided and the respective advertised price parameter associated with the provided services and wherein each service providing node's service price determination means 1236 is operable to vary from time to time its advertised price parameter in such a way as to seek to maximise the corresponding benefit parameter.

Figure 2

## Description

**Field of the Invention**

The present invention relates to load balancing in a data network such as a computer network or a telecommunications network, etc.

**Background to the Invention**

A data network is often used to provide services to a large number of users who are connected to the network at the "edge" of the network. Typically, within the network there are a large number of devices able to provide any of the services which the users might reasonably request (i.e. a service which the user has reason to believe that at least one device on network will be able to provide). An example of this is in the Internet where a user requests a web page by typing in a URL into his/her web browser. In addition to the fact that a popular web page is likely to be "cached" at a device rather closer to the requesting user device than on a web server actually administered by the organisation responsible for the content of the web page (and possibly even on the user device itself), if it is a popular web page, the organisation responsible is likely to have several web servers operating in parallel each of which is equally competent to provide the web page.

In such a case, it is sensible to provide a load balancing mechanism to try to ensure that the load between all available devices (e.g. web servers) serving a large number of incoming requests is reasonably evenly balanced between the various devices. This is often done in a centralised manner where an initial distribution point receives all incoming requests which are capable of being handled by a plurality of devices (e.g. web servers in a server farm) and determines which actual device to send the request to either based on a simple algorithm such as a round robin algorithm or based on a more complicated algorithm in which the distribution device monitors the load of each candidate device and sends the request to the least loaded device, etc. However, a load balancing mechanism such as this does not scale well (i.e. as the number of possible devices which could provide a particular service increases, the algorithm performs increasingly less well).

The caching mechanism employed in the Internet does provide a scalable load balancing mechanism for the provision of web pages however it is not straightforwardly applicable to the provision of more complex services and does not always result in very good load balancing (e.g. a particular server could receive a large number of requests which it is able to provide - in theory - but cannot satisfy in good time because it is overloaded while other devices which could be satisfying the requests more promptly remain idle).

In the field of distributed computing there have been several attempts to provide market based resource allocation (which can be thought of as a generalisation of load balancing) where CPU time and storage space are treated as resources. However, generally in these cases a bidding mechanism is employed in order to perform the allocation which requires a large amount of overhead in terms of bidding messages and is therefore less well suited to a data network where network bandwidth is scarce.

A paper by Kazuhiro Kuwabara, Toru Ishida, Yohiyasu Nishibe and Tatsuya Suda entitled "An equilibratory Market-Based Approach for Distributed Resource Allocation and its application to Communication Network Control" explains that a better approach in the case of providing communications network control is to use a market based approach where sellers simply offer resources at a certain price whilst buyers decide from which sellers to purchase resource based on the offered prices of the respective sellers, since this removes the overheads of sending several bidding messages back and forth between sellers and buyers. The paper also explains that each buyer and seller should try to maximise its utility which in the case of sellers is proportional to the amount of resource sold times the price (above some threshold minimum price below which the seller makes a loss) at which it is sold. However, the paper suggests that because they are using a model in which sellers and buyers have only limited information (sellers cannot see the prices offered by other sellers) then the sellers can rely solely on a very simple heuristic to decide at what price to offer resources. In particular, the heuristic they suggest is to set the price for the next timeslot to be equal to the demand/utilisation (they assume that demand can always be satisfied so demand always equals utilisation) of the current timeslot such that a low demand in the current timeslot will cause a low price to be set in the next timeslot and a high demand in the current timeslot will cause a high price to be set for the next timeslot. Note in particular that in the mechanism described in this paper the seller never actually determines the actual benefit which it derives in a particular timeslot as a result of setting a particular price in the previous timeslot. Furthermore, the mechanism is not suited to use in a heterogeneous environment in which there are very many different devices having different properties, nor is it easy to imagine how the mechanism could be straightforwardly modified for use in such an environment. Finally, it requires co-operation amongst the different devices in the sense that they must all use the same measures of utilisation etc. for the system to work.

**Summary of the Invention**

According to a first aspect of the present invention, there is provided a data network comprising a plurality of interconnected service providing nodes each of which is operable to provide one or more services to one or more service requesting devices connected to the network, each service providing node being operable to set and advertise a price parameter whereby the or each service requesting device may select to receive one or more services or parts thereof from any one or more of the service providing nodes in dependence upon each respective advertised price parameter, wherein each service-providing node determines a benefit parameter which depends upon the number and/or type of services provided and the respective advertised price parameter associated with the provided services and wherein each service providing node is operable to vary from time to time its advertised price parameter in such a way as to seek to maximise the corresponding benefit parameter. By explicitly calculating a benefit parameter it is easier to develop more complex algorithms to seek to maximise the benefit parameter compared to the use of simple heuristics which avoid the need to explicitly calculate a benefit parameter as is done in the Kuwabara paper. For example, in a preferred embodiment, the algorithm used to seek to maximise the benefit parameter is an evolutionary algorithm in which the benefit parameter is used as the fitness parameter. Furthermore, such a system may employ heterogeneous service providing nodes in which different nodes experience different benefits for a certain amount of service provision, or which measure service provision (or resources generally) according to different measures or means. Preferably the benefit parameter is calculated in respect of each timeslot; however, alternatively, it is calculated in respect of a period comprising more than a single timeslot (or a sort of moving average is calulated based on all or a number of the preceding timeslots, possibly with a larger weighting in respect of the most recent timeslot or timeslots compared to more distant timeslots, etc.) In a case where a service providing node does not provide a full service (or an integer number of full services) to a service requesting device in say a single timeslot, the benefit parameter may be based on the amount of service provided rather than say the number of complete services provided and the wording "number and/or type of services provided" is intended to cover this eventuality.

The "price" parameter may be a notional monetary price or an actual monetary price. Alternatively, it could be some other sort of cost such as, for example, the amount of delay (e.g. from the time when the request is actually submitted to the service providing node) before the requested service is completed, etc.

The service requesting devices could be devices connected to the network and directly or indirectly under the control of an end user (whether an individual person or an organisation). Alternatively, the service requesting devices could themselves be nodes of the network, most preferably the ingress nodes. In this second arrangement, a user device attached to the network makes a request for a service and this is sent to the ingress node to which the device is attached (or to one of the ingress nodes to which it is attached where it is attached to more than one ingress node). Upon receipt at the ingress node, an agent (i.e. an autonomous software agent) acting on behalf of the user, acts as the service requesting device (which is therefore physically embodied by the hardware forming the ingress node) and selects one or more service providing nodes to provide the service(s) requested by the attached user device so as to seek to minimise the cost to the user (possibly bearing in mind other factors such as wanting to spread the load so as to minimise the risk to the user of a single supplier failing, etc.). The services can either be provided directly to the end user by the service providing nodes or they can be provided to the ingress node which can then forward the service(s) (or the results of the service(s)) to the end user device. The advantage of operating in the second manner (using the ingress nodes as intermediaries) is that the ingress nodes can be maintained under the same administrative control as the service providing nodes and can therefore be controlled to adopt a particular strategy for requesting services in such a way as to achieve the overall objectives of the scheme, namely efficient load-balancing with minimal overhead in terms of control messages sent over the network. These issues will be discussed in greater detail below with reference to the specific embodiments.

Preferably, in addition to the price parameter there is at least one additional parameter (e.g.a quality parameter) which can be varied independently of the price parameter, or, equivalently, the price parameter is a multi-valued parameter containing more than one value which can be varied independently of one another. This has several advantages over a single-valued system, especially in terms of making the system more flexible for use in heterogeneous networks in which the various devices and nodes etc. making up the network have different properties (e.g. some nodes may be older and slower and generally less efficient than others, etc.).

There are several different possible mechanisms by which the price parameter can be advertised and the most efficient mechanism to use will depend upon the overall architecture of the network. For example a bulletin board approach could be used; this could be distributed over the network, for example by providing it as a web page which may be cached locally by nodes through which the web page passes en route to the requesting device in the normal manner in which web pages may be cached on the Internet. Alternatively, in a peer to peer network environment, a peer to peer approach for advertising services and associated process could be used in an entirely analogous manner to the way in which files are advertised and searched for in current peer to peer mechanisms such as is done in, for example, the well known "Gnuttella" peer to peer file sharing network protocol. Alternatively, a broadcast mechanism could be used where service providing nodes simply broadcast there services and offered prices to all or a subset of service requesting devices. Such a system would be particularly well suited to mechanisms where there is a common broadcast channel available to the system already, to which any connected device may choose to connect and "listen" or not - for example in cases where television or radio programs are being broadcast (e.g. to a digital television set-top box or to a cable television set-top box or modem, etc.).

For the system to work particularly well, it is likely that in most circumstances some sort of noise will be required to prevent the system from oscillating wildly and switching between some service providing nodes being overloaded and others being underutilised and then oscillating to another state in which the previously overloaded nodes become underutilised and the previously underutilised ones become overloaded, etc. One approach to avoiding this is to encourage the service requesting devices to request services from a number of different service providing nodes (e.g. to split up their desired service provision into separate "chunks" and request that different nodes provide the different chunks, etc.). This could be done either by controlling the algorithm used by the service requesting devices directly (this is most easily achieved where the service requesting is performed by an agent acting on behalf of the end user located within an ingress node to the network which is under the same control as the service providing nodes); alternatively, however, the service providing nodes could add some noise to the system themselves to encourage the end user devices to automatically behave in a more balanced way (i.e. to avoid trying to put all of their "eggs in one basket" by requesting all of their service needs from the node advertising the cheapest price) - this could be done in a number of ways, such as, for example, from time to time not carrying out a requested service (this might encourage the end device to spread the load so that only a small part of any requested service will fail if there is a failure by one node), a limit could be placed on the amount of service that is provided to any one service requesting device from any single node, etc.

According to a second aspect of the present invention, there is provided a method of operating a data network comprising a plurality of interconnected service providing nodes each of which is operable to provide one or more services to one or more service requesting devices connected to the network, the method comprising each service providing node setting and advertising a price parameter whereby the or each service requesting device may select to receive one or more services or parts thereof from any one or more of the service providing nodes in dependence upon each respective advertised price parameter, wherein each service-providing node determines a benefit parameter which depends upon the number and/or type of services provided and the respective advertised price parameter associated with the provided services and wherein each service providing node is operable to vary from time to time its advertised price parameter in such a way as to seek to maximise the corresponding benefit parameter.

According to a third aspect of the present invention, there is provided a service providing node for use in a data network comprising a plurality of interconnected service providing nodes each of which is operable to provide one or more services to one or more service requesting devices connected to the network, the service providing node being operable to set and advertise a price parameter whereby the or each service requesting device may select to receive one or more services or parts thereof from any one or more of the service providing nodes in dependence upon each respective advertised price parameter, wherein the service-providing node determines a benefit parameter which depends upon the number and/or type of services provided and the respective advertised price parameter associated with the provided services and wherein the service providing node is operable to vary from time to time its advertised price parameter in such a way as to seek to maximise the corresponding benefit parameter.

According to a fourth aspect of the present invention, there is provided a service requesting device suitable for connection to a data network comprising a plurality of interconnected service providing nodes each of which is operable to provide one or more services to one or more service requesting devices connected to the network, each service providing node being operable to set and advertise a price parameter whereby the or each service requesting device may select to receive one or more services or parts thereof from any one or more of the service providing nodes in dependence upon each respective advertised price parameter, wherein each service-providing node determines a benefit parameter which depends upon the number and/or type of services provided and the respective advertised price parameter associated with the provided services and wherein each service providing node is operable to vary from time to time its advertised price parameter in such a way as to seek to maximise the corresponding benefit parameter, the service requesting device having means for requesting one or more services or parts thereof from a plurality of service providing nodes, wherein the amount of service requested from each node varies in accordance with the advertised price parameter of each node such that more service is requested form nodes advertising lower price parameters than from those advertising higher price parameters but such that the total amount of service requested is spread amongst a plurality of service providing nodes.

Further aspects of the present invention relate to methods of operation of service providing nodes and service requesting devices respectively and to computer programs for implementing the methods of the present invention, and to data carriers, preferably tangible data carriers such as magnetic (e.g. hard disk drives), optical (e.g. CD's and DVD's) or solid state (e.g. usb memory sticks) storage devices storing such programs, etc.

## Brief Description of the Drawings

In order that the present invention may be better understood, embodiments thereof will now be described with reference to the accompanying drawings in which:

Figure 1 is a schematic overview of a data network in accordance with a first embodiment of the present invention;

Figure 2 is a schematic illustration of one of the service providing nodes of the data network of Figure 1;

Figure 3 is a schematic illustration of one of the service requesting devices of the data network of Figure 1;

Figure 4 is a flow chart illustrating the steps performed by the data network of figure 1 in providing services to the service requesting devices; and

Figure 5 is a schematic illustration of an ingress node according to a second embodiment of the present invention.

**Detailed Description of Embodiments of the Invention**

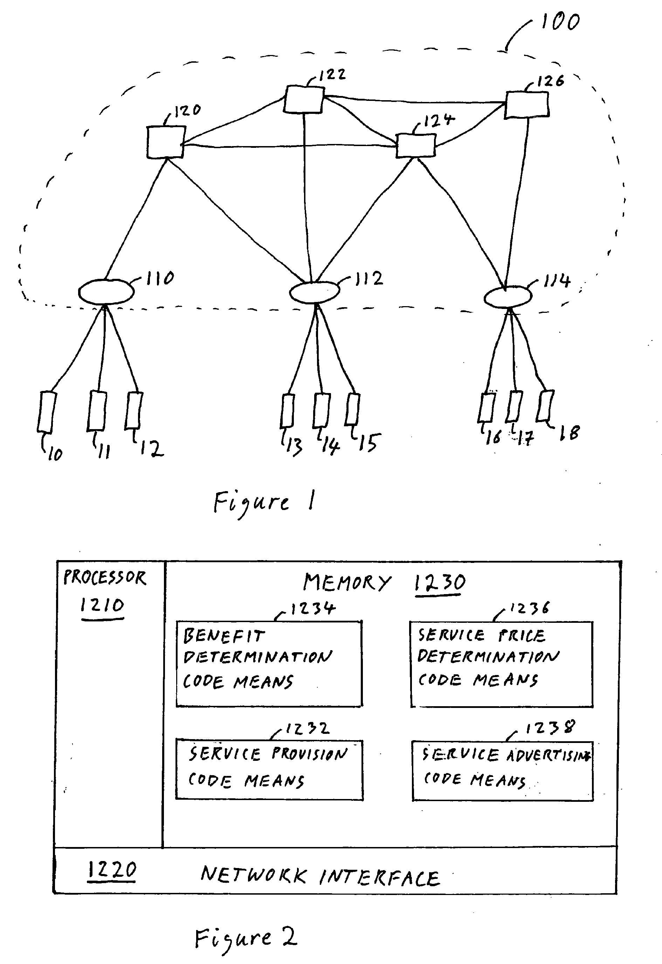

Figure 1 illustrates a data network 100 comprising a plurality of service providing nodes 120, 122, 124, 126 and a plurality of ingress nodes 110, 112, 114. Connected to the ingress nodes 110, 112, 114 of the data network are a plurality of service requesting devices 10-18.

First Embodiment

In overview, the data network 100 of the first embodiment as illustrated above operates as follows. Each of the service providing nodes 120, 122, 124, 126 periodically advertises various services which it will perform on behalf of one of the connected requesting devices 10-18 upon request at a particular cost which is also advertised by the service providing nodes. In the present embodiment, the advertisement is performed by means of a bulletin board. The bulletin board is a web page which is hosted by one of the nodes of the network (in this case node 112) and which provides details (in the present embodiment using eXtensible Markup Language (XML) in order to be readily machine readable as well as viewable by a human user viewing the web page with a suitable XML enabled web browser) of the various services offered by the service providing nodes and the current advertised prices of those services as offered by each node offering that particular service. Each service providing node then periodically contacts the bulletin board hosting node 112 to provide its current offered prices and the bulletin board hosting node 112 then updates the bulletin board with the latest prices. Each service requesting device can access the bulletin board to view current prices offered by the various service providing nodes.

Many different types of services can be offered by the service providing nodes and indeed different nodes could offer different services and the present invention in its broadest form is not intended to be limited in any way to the type of services offered by the nodes which could range from the simple provision of files or web pages etc. to more computationally intensive services such as re-encoding audio-video data from one format to another. In the present embodiment, each service providing node offers two services: the first is to take audio video material encoded according to the MPEG-2 standard (e.g. as typically found on normal commercial DVD's) and to convert it into a lower quality Audio Video Interleave (AVI) file containing the audio-video material re-encoded into MP3 (MPEG-1 layer 3) and Moving JPEG suitable for play by a relatively simple portable device (hereinafter referred to as service 1) and the second service is to take an input broadcast television signal and re-encode it into a Flash Video Format (FLV) for streaming over the network to one of the requesting devices (hereinafter referred to as service 2) at a bit rate specified by the requesting device (again so as to be suitable for viewing on the requesting device which might be a relatively simple portable device).

In the present embodiment, each of the services is divisible into chunks. In the case of service 1, each service requesting node offers a price in terms of cost per Megabyte of MPEG-2 data converted. For a file of a given size in MPEG-2 to be converted, the service requesting device chooses a certain number of Megabytes to be converted by each service providing node based on the instantaneous prices offered by the nodes. In the present embodiment, this selection is made according to the following formula:

$$a_{ij}^{\pi} = A_j^{\pi} \cdot \frac{u_{b_j}^{\pi}\left(p_{s_i}^{\pi}\right)}{\sum_{i=1}^{|S|} u_{b_j}^{\pi}\left(p_{s_i}^{\pi}\right)}$$

where $a_{ij}^{\pi}$ is the quantity of service, π, to be provided (which in this case is service 1 and therefore $a_{ij}^{\pi}$ corresponds to the number of Megabytes of MPEG-2 data to be converted) by service providing node *i* for service requesting device *j*; $A_j^{\pi}$ is the total amount of service π desired by service requesting device *j* (in any given market time-step - i.e. $A_j^{\pi} = \sum_{i=1}^{|S|} a_{ij}^{\pi}$ where |S| is the total number of service providing nodes); and $u_{b_j}^{\pi}\left(p_{s_i}^{\pi}\right)$

the (normalised) utility function of service requesting device j for (one unit of) service $\pi$ (which is generally a function of the current price per unit offered for that service), when the current price (per unit) offered for that service by service providing node $s_i$ $\left(p_{s_i}^{\pi}\right)$ are entered into the function (note that a service requesting device only has a single utility function for each service, but the utility obtained from a particular service providing node (i.e. seller $s_i$) depends on the price charged by that node).

The same formula as given above is also used for service B, but in this case the task is divisible into seconds per minute of broadcast audio video material converted into FLV format with an advertised price parameter of cost per second per minute of material converted.

In the present embodiment, once a requesting device has decided how it wishes to divide the service to be performed between the various competing service providing nodes, it then additionally selects one of the nodes to act as co-ordinator and advises it of the proportion of the task to be performed by each selected service providing node. The selected co-ordinator node then determines how to divide up the task between the selected nodes in accordance with the proportions specified by the requesting device and arranges for appropriate sub-tasks to be provided to the respective nodes and then to gather together the results of the sub-tasks to provide a unified result to the requesting device. In an alternative embodiment, however, the requesting device could itself perform this co-ordination - such an approach is particularly suited to the second embodiment described below in which there is provided an agent which acts as the requesting device on behalf of an end user device and which resides on an ingress node to the network (and therefore has considerable processing power available to it for performing the co-ordination function).

As will be explained in greater detail below, each service providing node selects a price at which to offer each service according to an algorithm which seeks to maximise the benefit obtained by the node - where the benefit is a function of the price charged and the amount of service provided at that price. In the present embodiment, this is achieved by having a population of different prices and assigning a fitness to each of these which is equal to the benefit obtained by the node when providing services at that price and then using a genetic algorithm to generate new prices based on the fitness of the current population of prices.

In particular, in the present embodiment, the following genetic algorithm is used by each service providing node to obtain a current price to set.

1. Generate an initial population, P. Each individual in P in the present embodiment is a real value, drawn from a uniform (pseudo)random distribution $[0, p_{max}]$.

*2. Initial Fitness Testing*

a. Set the seller's (i.e. the node's) offer for the next time step to the value of the first individual in P, and enter the market for one market time-step.

Record the seller's revenue, $r_{s_i}^{\pi}$, as that individual's fitness, where $r_{s_i}^{\pi} = \sum_{j=1}^{|B|} p_{s_i}^{\pi} \cdot a_{ij}^{\pi}$ and $|B|$ is the total number of buyers (i.e. service requesting devices).

b. Repeat for subsequent individuals in P, until all initial individuals have been fitness tested in the market.

3. *Probabilistic tournament selection*

a. Select four individuals $x_1, x_2, x_3, x_4$ from P, at (pseudo)random, such that $x_1 \neq x_2 \neq x_3 \neq x_4$.

b. Let champion $c_1$ be either $x_1$ or $x_2$ the fitness of whichever is greater with probability 0.9, the fitness of whichever is less otherwise.

c. Let champion $c_2$ be either $x_3$ or $x_4$ the fitness of whichever is greater with probability 0.9, the fitness of whichever is less otherwise.

4. Let the offspring, o, be a new individual with its value equal to the mid-point of the values of $c_1$ and $c_2$.

5. Mutate o by perturbing its value by (i.e. in the present embodiment by adding to its value) a random number drawn from a normal distribution with mean zero and standard deviation $\alpha$ (which in the present embodiment is set to 0.1) with the proviso that the mutated price shall not exceed $p_{max}$ or be less than 0.

6. Select the individual in $\{x_1, x_2, x_3, x_4\}$ with the lowest fitness value, remove it from P and insert o into P.

7. Set the seller's offer to the value encoded in (i.e. in the present embodiment of) o and enter the market for one market time-step. Record the seller's revenue $r_{s_i}^{\pi}$ as o's fitness.

8. Repeat from step 3.

In the present embodiment, a population size of 10, a market time-step of one minute, an $\alpha$ value of 0.1 and a $p_{max}$ of 400 are employed. Furthermore, as is apparent from Figure 1 $|B| = 9$ (Service requesting devices 10-18) and |S| = 4 (Service providing nodes 120, 122, 124, 126). The above arrangement can be considered as corresponding to what is known in the art as a Bertrand Game. A Bertrand Game is one in which two or more sellers compete by simultaneously setting prices for equivalent goods, and buyers then decide the quantity to purchase from each seller in a rational utility-maximising manner. The theoretical non-co-operative Nash equilibrium outcome is the Betrand Equilibrium at which all sellers charge the marginal cost price and share the market equally. It is the equal sharing of the market at the Betrand Equilibrium which causes the desired load-balancing of the present embodiment.

Figure 2 gives a schematic illustration of one of the service providing nodes 124, from which it can be seen that each service providing node of the present embodiment includes a processor 1210, a network interface 1220 for interfacing over the network to other devices in or connected to the network; and a memory 1230. Furthermore, as can be seen from Figure 2, the memory 1230 includes service provision code means 1232 which is capable of performing audio video encoding and decoding and associated tasks in order to provide services A and B, benefit determination code means 1234 which is capable of causing the processor to determine a benefit obtained by the device in any given market time-step as a result of the provision of services to requesting devices (in the present embodiment according to the formula given above of $r_{s_i}^{\pi} = \sum_{j=1}^{|B|} p_{s_i}^{\pi} \cdot a_{ij}^{\pi}$ ); service price determination code means which is capable of causing the processor to determine a next price to set based on the past benefit determinations made by the processor operating under control of the benefit determination code means and which in the present embodiment achieves this by causing the processor to perform the genetic algorithm described above; and service advertising code means which is operable to advertise each of the services offered by the node and the associated price for providing that service that will be charged for services provided in the following market time-step for orders placed in the current time-step, and which in the present embodiment achieves this by updating the bulletin board hosted by ingress node 112.

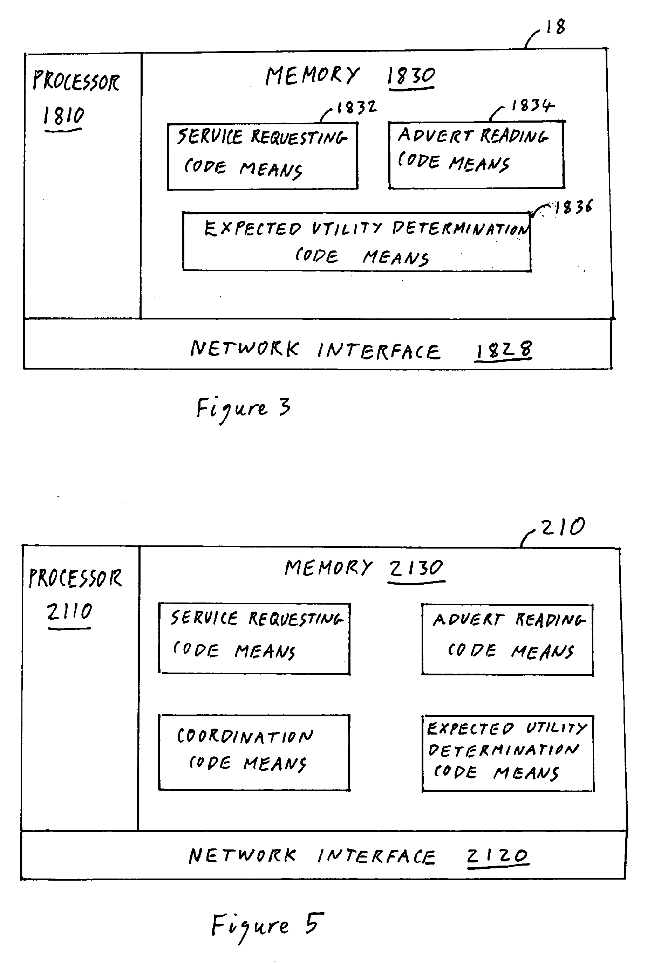

Figure 3 gives a schematic illustration of some of the important components of one of the service requesting devices (18), from which it can be seen that it has a network interface 1820 for interfacing to the network (directly to ingress node 114 and thereafter to the rest of the network via ingress node 114), a processor 1810 for performing processing in accordance with stored executable programs and a memory 1830 for storing executable programs and data etc. The memory 1830 has stored in it service requesting code means 1832 for requesting one or more of the service nodes to provide services to the service requesting devices, Advert reading code means 1834 for reading adverts concerning the cost parameters advertised by the service providing nodes, which, in the present embodiment comprises an application for accessing the information provided on the bulletin board hosted by ingress node 112 (in the form of XML data and parsing this to obtain the prices offered by each service node for the next market time step). The service requesting node is also seen to comprise expected utility determination code means 1836.

In the present embodiment, the Expected Utility Determination Code Means (EUDCM) provides the following functionality. When a user of the service requesting device 18 or an application running on the service requesting device 18 desires a service to be provided for it by the network 100, it informs the EUDCM accordingly - as part of the informing process the informing entity (be it a user or a computer application) specifies how much of the service it requires and may additionally advise of a utility function, $u_{b_j}^{\pi}(p)$ (where $b_j$ is the present node, 18), to be employed; if no utility function is explicitly provided then the EUDCM uses a default utility function which in the present embodiment is set to $u_{b_j}^{\pi}(p) = 375 - p$ . The EUDCM then causes the Advert Reading Code Means (ARCM) 1834 to start regularly contacting the bulletin board to obtain and pass on to the EUDCM 1836 up-to-date price information, $p_{s_i}^{\pi}$, about the offered services. The EUDCM then uses this price information together with the utility function, $u_{b_j}^{\pi}(p)$, (explicitly provided or the default as appropriate) in order to calculate an expected utility from purchasing service from each of the different service providing nodes and uses these to determine how much service to request from each service providing node for the following market time-step according to the following formula (originally given above)

$$a_{ij}^{\pi} = A_j^{\pi} \cdot \frac{u_{b_j}^{\pi}(p_{s_i}^{\pi})}{\sum_{i=1}^{|S|} u_{b_j}^{\pi}(p_{s_i}^{\pi})} .$$ Note if

any of the expected utilities are zero or negative for a particular service providing node, then the amount (of the relevant service, for that particular time-step) to be purchased from that node $a_{ij}^{\pi}$ is set to zero and ultimately no request is made to that service providing node for that time-step.

Having thus calculated the desired amounts to request from each service providing node, in the present embodiment, these desired amounts $a_{ij}^{\pi}$ are provided

to the service requesting code means 1832 which ensures that the advised amounts are duly requested from each of the specified service providing nodes. In the present embodiment, the service requesting code means also selects a co-ordinator node to co-ordinate work to be carried out by the different service providing nodes.

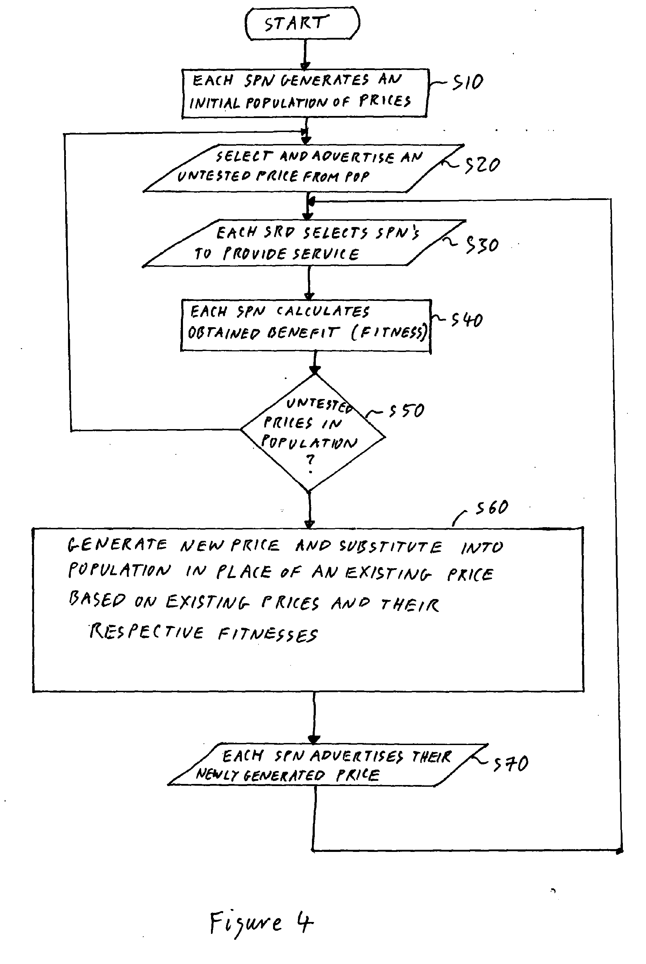

Figure 4 illustrates the overall processes performed in the present embodiment. Thus after commencement, the first step S10 of the method is for each Service Providing Node (SPN) to generate an initial population of prices. Then, at step S20, each node selects one of the untested prices in its population of prices and advertises this by sending the price to the bulletin board - naturally each node does this in respect of each service which it provides. Then, at step S30 each Service Requesting Device (SRD) selects a quantity (possibly zero) of service to "purchase" from each of the advertising SPN's in accordance with the adverticed prices and the utility function, as explained above and then requests such services from the respective SPN's. Then, at step S40, each SPN (generally) provides the requested service and calculates the "benefit" which it derives from such provision in the manner described above and sets this benefit as equalling the "fitness" of the respective price, and then the method proceeds to step S50.

At step S50 each SPN determines if it still has untested prices (i.e. prices which have not yet been assigned a fitness) in its price population, if so the method loops back to step S20 and each such SPN selects an untested Price to advertise and use as before (note incidentally that the population may contain more than one "price" having the same value - in the present embodiment such prices are considered as separate prices even though they have the same value and they may accordingly be assigned different fitnesses). Once an SPN has tested all of the prices in its initial population and assigned a fitness to each such price, then the method will move from step S50 to step S60 in which a new price is generated and substituted into the existing population of prices for the respective SPN in place of an existing price in dependence upon the fitnesses of the prices in the population, in the manner described above. Upon completion of step S60 the method proceeds to step S70 in which the newly generated price is advertised by the SPN for the following market time-step and then the method loops back to step S30. The method then carries on in this way perpetually.

## Second Embodiment

The second embodiment differs from the first only in that instead of the service requesting devices being responsible for selecting the quantity of service to purchase from each service providing node, this function is performed by one of the ingress nodes (e.g. nodes 110, 112 and 114 of Figure 1). In this embodiment, therefore, each user device (corresponding to the service requesting devices 10-18 of Figure 1) simply makes a request for some service to its directly connected ingress node which then performs the functions of reading the bulletin to ascertain current prices offered and determining the quantity of service to purchase from each SPN, etc. In the present embodiment, the responsible ingress node additionally performs any coordination required to coordinate the actions of multiple SPN's, etc. and then forwards on to the user device a fully preprocessed and ready to consume end result (e.g. a an audio video stream capable of being played directly by the user device).

Thus, as can be seen from Figure 5, ingress node 210 in the second embodiment includes a processor 2110, a network interface 2120 for connecting to other nodes in the network and to user devices which connect to the network via ingress node 210 and a memory 2130. The memory includes service requesting code means 2132, advert reading code means 2134 and expected utility determination code means 2136 which operate in the same way as the equivalent similarly named code means in the service request devices of the first embodiment, except that in this case the expected utility determination code means receives its requests from a user device, rather than from a user or an application directly (of course the ultimate request can again come from either an end user controlling the user device or an application running on the user device).

Additionally, in the second embodiment, the memory 2130 of ingress node 210 includes coordination code means 2138 which performs any necessary co-ordination between the different parts of a service being provided by different service providing nodes. (Compare with the first embodiment where such coordination was preferably done by one of the service providing nodes).

## Third Embodiment

The third embodiment is based on the first embodiment; however, instead of using a simple single-valued price parameter $p_{s_i}^{\pi}$, in this embodiment the single valued price parameter is replaced with a two valued or two component vector (hereinafter referred to as a price/quality vector) comprising a price parameter component and a quality parameter component $\mathbf{p}_{s_i}^{\pi} = \left( p_{s_i}^{\pi}, q_{s_i}^{\pi} \right).$

In the present embodiment, the quality parameter is an entirely notional value which can take any integer value between 0 and 400, as can the price parameter. However, in alternative embodiments the quality parameter could relate to an actual property such as, for example, the amount of delay before completing a particular service or part thereof, or a type of algorithm employed in carrying out the service (where for example, the higher the quality parameter, the more processor intensive the algorithm is and the better the result, etc. - in such circumstances the quality parameter might only be able to take on one of a number of discrete values rather than being continuously variable, etc.).

In order to accommodate a multi-value price/quality vector, both the user's utility function and the sellers benefit calculation should be changed to account for the multiple values to be taken into consideration simultaneously in such a case. Thus, in the present embodiment, buyers' (i.e. requesting devices') utility functions are all changed to the form

$$u_{b_j}^\pi \left( \mathbf{p}_{s_i}^\pi \right) = K_{b_j}^\pi + \mathbf{w}_{b_j}^\pi \cdot \mathbf{p}_{s_i}^\pi \quad \text{where} \quad K_{b_j}^\pi \quad \text{is a con-}$$

stant and $\mathbf{w}_{b_j}^\pi$ is a vector of weights,

$$\mathbf{w}_{b_j}^\pi = \left( w_{b_j 1}^\pi, w_{b_j 2}^\pi \right) \text{ to be applied to the components}$$

of the price/quality vector; this represents a linear utility function, however it will of course be apparent that other utility functions can be employed; it will further be apparent that this approach can be expanded to use price/quality vectors and corresponding weight vectors having more than two components each respectively. In the present embodiment, the default utility function employed has constant K equal to 0, a price weighting component of -1 and a quality weighting component of +1 (i.e. the utility function is simply u = q - p).

In the case of sellers' benefit functions, in the present embodiment, different sellers have different benefit functions. In this embodiment there are two sellers (service providing nodes) the first of which has a benefit

function of $\quad r_{s_i}^\pi = \sum_{j=1}^{|B|} \left( p_{s_i}^\pi - q_{s_i}^\pi \right) \cdot a_{ij}^\pi \quad$ and the sec-

ond of which has a benefit function of

$$r_{s_i}^\pi = \sum_{j=1}^{|B|} \left( p_{s_i}^\pi - 5 q_{s_i}^\pi \right) \cdot a_{ij}^\pi \quad \text{(i.e. the second service}$$

providing node values each unit of q 5 times more highly than does the first service providing node.

This use of heterogeneous populations of sellers (in terms of them having different benefit functions associated with multiple component price/quality vectors) allows the load balance between the different sellers to be adjusted (i.e. to a stable, unequal balance). In the present embodiment, both sellers want to reach the same equilibrium, though the difference between benefit functions moves the position at which this is achieved. For example, the seller which values q at 5 times p is forced to either significantly lower its offers on q to account for a given price, or else raise its price significantly in order to compensate for a high q or some combination of the two approaches. The seller which values p and q equally therefore always has an advantage in the market. This advantage is determined by the difference in benefit functions between it and its competitor (and is arguably analogous to one seller having higher production costs and thus being less able to compete). This, in turn, leads to the more competitive seller (that which values p and q equally for example) obtaining more custom, and hence having a higher balance of the total load than the other seller. The difference in load achieved depends on the degree of risk aversion on the part of the buyers and/or the amount of noise in the system as well as on the difference in comparative valuations of p and q between the sellers.

Simulations have shown that this stable but unequal load balancing which is achievable using heterogeneous sellers (i.e. sellers having different benefit functions) and multiple component price/quality vectors is not achievable using a single issue model - i.e. using a system where benefit/utility depends only upon a single value parameter (e.g. a single value price parameter). This arrangement therefore provides a distinct advantage over say the Kuwabara system (discussed above), since it is possible to exploit multiple issues in order to control the load better in a system having heterogeneous service providing nodes.

Variations

Many variations are possible within the scope of the present invention as set out in the appended claims. For example, multi-issue (e.g. the multi-component price/quality vector) arrangements can be used in an arrangement along the lines of the second embodiment (i.e. where the requesting is done not by the end user devices attached to the network themselves, but on their behalf by an agent running within a node of the network itself, most preferably an ingress node to the network, etc.).

Additionally, it will be apparent that many of the functions described in the embodiments above can be performed in devices other than the ones in which they have been described as occurring. For example, one arrangement which might be convenient in some circumstances is for an agent located within the network to perform the requesting of services form service providing nodes, but for the services themselves to be delivered directly by the service providing nodes to the end user device, which then performs any necessary co-ordination of the results of the services from the different service providing nodes itself, etc.

Instead of using a bulletin board mechanism for advertising the services available over the network and the current prices offered for these by the various service providing nodes, many other mechanisms could be used, such as having each service providing node directly broadcast the information to everyone connected to the network, or having each service providing node only send this info upon receipt of a request for the info from a service requester, etc.

Instead of using an evolutionary algorithm for setting the price of resources offered by service providing nodes, any other "learning algorithm" (e.g. a neural network) could be used. Furthermore, it is possible that some sort of simple hill climbing algorithm could be used (e.g. specify a delta of, say, 1, set a starting price, test, increase price by delta and test again, if benefit increases with new price, increase price again by delta, otherwise decrease price by delta, repeat indefinitely).

As well as using this mechanism simply for load balancing, it could additionally be used as a fault finding mechanism (i.e. a system monitoring tool). In this situation, the prices offered by the various service providing nodes would be monitored by an administrator (or an administrative software agent or application acting on behalf of an administrator). A significant change in the price for a particular service offered by a service providing node could be an indication of a fault occurring with that node and could be used to trigger an investigation of the suspicious node in question.

**Claims**

1. A data network (100) comprising a plurality of interconnected service providing nodes (120, 122, 124, 126) each of which is operable to provide one or more services to one or more service requesting devices (10-18) connected to the network, each service providing node having service price determination means (1236) for setting a price parameter and service advertising means (1238) for advertising a price parameter whereby the or each service requesting device may select to receive one or more services or parts thereof from any one or more of the service providing nodes in dependence upon each respective advertised price parameter, wherein each service-providing node includes benefit determination means (1234) for determining a benefit parameter which depends upon the number and/or type of services or parts thereof provided and the respective advertised price parameter associated with the provided services and wherein each service providing node is operable to vary from time to time its advertised price parameter in such a way as to seek to maximise the corresponding benefit parameter.

2. A data network according to claim 1 wherein each service providing node includes an evolutionary algorithm engine (1236) for setting its price parameter, the evolutionary algorithm maintaining a population of individuals each of which has an associated price parameter, wherein the evolutionary algorithm engine is operable to assign a fitness to each individual in dependence upon the calculated benefit parameter calculated in respect of the provision of services at a particular advertised price associated with the individual.

3. A data network according to any preceding claim wherein the price parameter comprises a vector of two or more components.

4. A data network according to any preceding claim including a plurality of heterogeneous service providing nodes using different benefit functions for calculating the benefit parameter.

5. A method of operating a data network (100) comprising a plurality of interconnected service providing nodes (120,122,124,126) each of which is operable to provide one or more services to one or more service requesting devices (10-18) connected to the network (100), the method comprising each service providing node:

    setting and advertising a price parameter whereby the or each service requesting device may select to receive one or more services or parts thereof from any one or more of the service providing nodes in dependence upon each respective advertised price parameter;
    determining a benefit parameter which depends upon the number and/or type of services provided and the respective advertised price parameter associated with the provided services; and varying from time to time its advertised price parameter in such a way as to seek to maximise the corresponding benefit parameter.

6. A method according to claim 5 wherein the step of setting a price parameter includes using an evolutionary algorithm which maintains a population of individuals each of which has an associated price parameter, wherein the evolutionary algorithm assigns a fitness to each individual in dependence upon the calculated benefit parameter calculated in respect of the provision of services at a particular advertised price associated with the individual.

7. A method according to claim 5 or 6 wherein the price parameter comprises a vector of two or more components.

8. A method according to claim 5, 6 or 7 in which at least some of the service providing nodes calculate their benefit parameter using different benefit functions.

9. A service providing node (120) for use in a data network (100) comprising a plurality of interconnected service providing nodes (120,122,124,126) each of which is operable to provide one or more services to one or more service requesting devices (10-18) connected to the network, the service providing node being operable to set and advertise a price parameter whereby the or each service requesting device may select to receive one or more services or parts thereof from any one or more of the service providing nodes in dependence upon each respective advertised price parameter, wherein the service-providing node determines a benefit parameter which depends upon the number and/or type of services provided and the respective advertised price parameter associated with the provided services and wherein the service providing node is operable to vary from time to time its advertised price parameter in such a way as to seek to maximise the corresponding benefit parameter.

10. A service requesting device (18) suitable for connection to a data network (100) comprising a plurality of interconnected service providing nodes (120, 122,124,126) each of which is operable to provide one or more services to one or more service requesting devices (10-18) connected to the network (100), each service providing node being operable to set and advertise a price parameter whereby the or each service requesting device may select to receive one or more services or parts thereof from any one or more of the service providing nodes in dependence upon each respective advertised price parameter, wherein each service-providing node determines a benefit parameter which depends upon the number and/or type of services provided and the respective advertised price parameter associated with the provided services and wherein each service providing node is operable to vary from time to time its advertised price parameter in such a way as to seek to maximise the corresponding benefit parameter, the service requesting device having means for requesting one or more services or parts thereof from a plurality of service providing nodes, wherein the amount of service requested from each node varies in accordance with the advertised price parameter of each node such that more service is requested form nodes advertising lower price parameters than from those advertising higher price parameters but such that the total amount of service requested is spread amongst a plurality of service providing nodes.

11. A computer program or suite of computer programs for controlling one or more network nodes and/or service requesting devices to carry out the steps of any of method claims 5 to 9.

12. Carrier means (preferably tangible carrier means) carrying the computer program or programs of claim 11.

Figure 1

Figure 2

/18

| PROCESSOR 1810 | MEMORY 1830 |
|---|---|
| | /1832 SERVICE REQUESTING CODE MEANS |
| | /1834 ADVERT READING CODE MEANS |
| | /1836 EXPECTED UTILITY DETERMINATION CODE MEANS |
| | NETWORK INTERFACE 1828 |

Figure 3

/210

| PROCESSOR 2110 | MEMORY 2130 |
|---|---|
| | SERVICE REQUESTING CODE MEANS |
| | ADVERT READING CODE MEANS |
| | COORDINATION CODE MEANS |
| | EXPECTED UTILITY DETERMINATION CODE MEANS |
| | NETWORK INTERFACE 2120 |

Figure 5

START

EACH SPN GENERATES AN INITIAL POPULATION OF PRICES — S10

SELECT AND ADVERTISE AN UNTESTED PRICE FROM POP — S20

EACH SRD SELECTS SPN's TO PROVIDE SERVICE — S30

EACH SPN CALCULATES OBTAINED BENEFIT (FITNESS) — S40

UNTESTED PRICES IN POPULATION ? — S50

GENERATE NEW PRICE AND SUBSTITUTE INTO POPULATION IN PLACE OF AN EXISTING PRICE BASED ON EXISTING PRICES AND THEIR RESPECTIVE FITNESSES — S60

EACH SPN ADVERTISES THEIR NEWLY GENERATED PRICE — S70

Figure 4

Europäisches
Patentamt

European
Patent Office

Office européen
des brevets

## EUROPEAN SEARCH REPORT

**Application Number**

EP 08 25 2953

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHUNLIN L ET AL: "A distributed utility-based two level market solution for optimal resource scheduling in computational grid" PARALLEL COMPUTING, ELSEVIER PUBLISHERS, AMSTERDAM, NL, vol. 31, no. 3-4, 1 March 2005 (2005-03-01), pages 332-351, XP025292046 ISSN: 0167-8191 [retrieved on 2005-03-01] * abstract * * page 333 - page 341 * | 1,5,9-12 | INV. H04L29/08 H04L12/24 G06F17/18 |
| X | KARL-UWE STUCKY ET AL: "Solving Scheduling Problems in Grid Resource Management Using an Evolutionary Algorithm" ON THE MOVE TO MEANINGFUL INTERNET SYSTEMS 2006: COOPIS, DOA, GADA, AN D ODBASE LECTURE NOTES IN COMPUTER SCIENCE;;LNCS, SPRINGER, BERLIN, DE, vol. 4276, 1 January 2006 (2006-01-01), pages 1252-1262, XP019050312 ISBN: 978-3-540-48274-1 * abstract * * page 1252 - page 1256, line 2 * | 1-12 | |
| X | EP 1 345 167 A (BRITISH TELECOMM [GB]) 17 September 2003 (2003-09-17) * abstract * * paragraphs [0001] - [0004] * * paragraphs [0013], [0014] * * paragraphs [0022] - [0027] * | 1-12 | TECHNICAL FIELDS SEARCHED (IPC) H04L G06F |

-/--

The present search report has been drawn up for all claims

| Place of search | Date of completion of the search | Examiner |
|---|---|---|
| Munich | 26 May 2009 | Buhleier, Rainer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

# EUROPEAN SEARCH REPORT

Application Number

EP 08 25 2953

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN ET AL: "A study of the contribution made by evolutionary learning on dynamic load-balancing problems in distributed computing systems" EXPERT SYSTEMS WITH APPLICATIONS, OXFORD, GB, vol. 34, no. 1, 1 January 2008 (2008-01-01), pages 357-365, XP022523836 ISSN: 0957-4174 * abstract * * page 357 - page 359, left-hand column, paragraph 3 * ----- | 1-12 | |
| A | YEE-HWEI TEH ET AL: "Observations on using genetic algorithms for dynamic load-balancing" IEEE TRANSACTIONS ON PARALLEL AND DISTRIBUTED SYSTEMS, IEEE SERVICE CENTER, LOS ALAMITOS, CA, US, vol. 12, no. 9, 1 September 2001 (2001-09-01), pages 899-911, XP011095948 ISSN: 1045-9219 * abstract * * page 899 - page 901, paragraph 2 * ----- | 1-12 | |
| A | KHUNKITTI A ET AL: "Service enhancement using resource evolutionary management" NETWORKS, 2001. PROCEEDINGS. NINTH IEEE INTERNATIONAL CONFERENCE ON OCTOBER 10-12, 2001, PISCATAWAY, NJ, USA,IEEE, 10 October 2001 (2001-10-10), pages 104-109, XP010565507 ISBN: 978-0-7695-1187-0 * the whole document * ----- | 1-12 | TECHNICAL FIELDS SEARCHED (IPC) |

The present search report has been drawn up for all claims

| Place of search | Date of completion of the search | Examiner |
|---|---|---|
| Munich | 26 May 2009 | Buhleier, Rainer |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 08 25 2953

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2009

| Patent document cited in search report | | Publication date | Patent family member(s) | | Publication date |
|---|---|---|---|---|---|
| EP 1345167 | A | 17-09-2003 | CA<br>WO<br>US | 2478712 A1<br>03079288 A2<br>2005097559 A1 | 25-09-2003<br>25-09-2003<br>05-05-2005 |

EPO FORM P0459

For more details about this annex : see Official Journal of the European Patent Office, No. 12/82